(19) Europäisches Patentamt
European Patent Office
Office européen des brevets

(11) **EP 1 760 456 A1**

(12) **EUROPEAN PATENT APPLICATION**

(43) Date of publication:
**07.03.2007 Bulletin 2007/10**

(51) Int Cl.:
**G01N 21/78** (2006.01)    **G01N 31/16** (2006.01)
**G01N 31/22** (2006.01)

(21) Application number: **05018930.7**

(22) Date of filing: **31.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Preventest Limited**
**Gibraltar (GI)**

(72) Inventors:
• **Haumont, Marc**
**21560 Couternon (FR)**

• **Carvin, Marc**
**21560 Couternon (FR)**
• **Prost, Frédéric**
**21560 Couternon (FR)**
• **Prost, Michel**
**21560 Couternon (FR)**

(74) Representative: **Micheli & Cie SA**
**122, Rue de Genève,**
**CP 61**
**1226 Thônex (CH)**

(54) **Reagent system and its use in spectrometric determination of low and high molecular weight PEGs in an aqueous fluid, method for determining the intestinal permeability with said system**

(57)    The present invention is concerned with (a) a reagent system and its use in spectrometric determination of polyethylene glycol (PEG) in an aqueous fluid to be tested, such as a biological fluid, said reagent system comprising two different colour-forming reagents: a first reagent for determining low molecular weight (lmw) PEG, which contains phosphomolybdic acid, a strong acid (such as HCl or trifluoroacetic acid) and barium chloride, said first reagent giving a yellowish to greenish cloudiness in the presence of lmw PEG, and a second reagent for determining high molecular weight (hmw) PEG, which contains a cobalt II salt and thiocyanate, said second reagent giving a blue to violet cloudiness in the presence of hmw PEG; (b) a method for determining intestinal permeability with said reagent system; and (c) a dosage kit for carrying out said method.

Fig. 1

**Description**

*Field of the invention*

This invention is concerned with (i) a new reagent system comprising two colour-formiug reagents, which is usable in the spectrometric determination of low molecular weight (lmw) and high molecular weight (hmw) PEGs in an aqueous fluid, (ii) its use for such a determination in a body fluid such as urine, (iii) a method for determining the intestinal wall permeability by administering to a patient an oral mixture of lmw PEG and hmw PEG then measuring the amount of said PEGs in the urine, and (iv) a dosage kit for carrying out said method.

*Prior art*

The intestinal wall acts as a barrier which regulates or controls the passage of molecules from the intestine lumen into the blood circulation. The essential function of the intestinal mucosa is to permit the passage into the organism, via the blood circulation, of small molecules resulting from the digestion of food under the action of the enzymes of the digestive tract.
In short, in healthy human beings, small molecules normally cross the intestinal wall, whereas normally macromolecules do not substantially cross the intestinal wall. An increase in the intestinal permeability allows macromolecules, such as proteins, antigens, viruses and bacteria, to cross the intestine mucosa; the consequences induced are *in fine* pathological: inflammations, allergies, food intolerances and infections. For instance, microorganisms, which are non pathogenic in the intestinal flora, can induce disseminated intravascular coagulations (DICs) after crossing the intestinal wall.
Studies regarding the permeability of polyethylene glycols, such as published by

- Chadwick VS et al., "Measurements of intestinal permeability using low molecular weight polyethylene glycols (PEG 400)", Gastroenterology, 1977; 73: 241-251,
- Lloyd JB et al., "Intestinal permeability to polyethylene glycol and sugars", Clinical Science, 1998; 95: 107-110,
- Parlesak A et al., "Parallel determination of gut permeability in man with M400, M1500, M4000 and M10000 polyethylene glycol", Eur. J. Clin. Biochem., 1994; 32: 813-820, and
- WO 2005/024423 A,

teach that (i) in normal healthy human beings, lmw PEGs cross the intestinal barrier, whereas hmw PEGs do not substantially cross said barrier. (ii) in some pathological cases, said hmw PEGs can cross said barrier, and (iii) a lmw PEG/hmw PEG system can be used for detecting an abnormal intestinal permeability.
The closest prior art is said WO 2005/024423 A document, incorporated here by reference, which discloses a method for assessing the permeability of the intestine comprising the steps of:

a) collecting a sample of urine from an individual after oral administration of hmw PEG and lmw PEG;
b) for the determination of the hmw PEG concentration:

i) pre-treatiag the urine sample by ions exchange resins or absorbent(s),
ii) adding a reagent containing-iodine, alkali metal iodide and an acid to the pre-treated urine sample, wherein the concentrations of iodine and the alkali metal iodide are adjusted in that way that essentially no colour reaction with lmw PEG but only with the hmw PEG occurs;
iii) determining optical density of the reaction mixture, eventually after a defined time;

c) for the determination of the lmw PEG concentration:

i) pre-treating the urine sample by ions exchange resins or absorbent(s),
ii) adding a reagent containing iodine, alkali, metal iodide and an acid to the pre-treated urine sample, wherein the concentrations of iodine and the alkali metal iodide are adjusted in that way that the colour reaction occurs with the lmw PEG;
iii) determining optical density of the reaction mixture, eventually after a defined time.

In short, according to that method, the final concentration of iodine for the measurement of hmw PEG is adjusted to 0,1-5 mM (preferably to 1-5 mM, more preferably to 1.8 mM), and for the measurement of lmw PEG to higher than 5 mM (preferably to 5-20 mM, more preferably to 8.33 to 12.5 mM).
In that method, it important to avoid $Be^{+2}$ and $Li^+$ ions in the urine to be tested, since the presence of those ions may unpaid the results.

However in that method, (i) the compulsory use of an ions exchange resin is expensive and time consuming, and (ii) the use of a colour-forming reagent containing $I_2$ and KI at different final concentrations can imply some difficulties when determining by spectrometry the concentrations of hmw PEG and lmw PEG in the urine to be tested.

### *Aim of the invention*

The aim of this invention is mainly to provide a new technique for determining the concentrations of lmw PEG and hmw PEG in an aqueous solution, such a biological fluid and in particular urine, which does imply the use of (i) an ions exchange resin and (ii) a $I_2$/KI reagent. Moreover, a further aim is to provide a technique which is not dependant on the urine matrix (i. e. nature or composition) by using the so called "known added amount" procedure, according to which known quantities of lmw PEG and hmw PEG are added ($\beta$) and are not added ($\alpha$) to the urine to be tested.

### *Subject of the invention*

According to a firs aspect of the invention, a reagent system is recommended, which is usable in spectrometric determination of polyethylene glycol (PEG) materials in an aqueous fluid to be tested, such as a biological fluid, in particular urine, wherein said reagent system comprises two different colour-forming reagents:

- a first reagent for determining low molecular weight (lmw) PEG, which is an aqueous solution containing (i) phosphomolybdic acid, (ii) a strong acid (in particular HCl or trifluoroacetic acid) and (iii) barium chloride, said first reagent giving a yellowish to greenish cloudiness in the presence of lmw PEG, and
- a second reagent for determining high molecular weight (hmw) PEG, which is an acidic aqueous solution containing (iv) a cobalt II salt and (v) thiocyanate, said second reagent giving a blue to violet cloudiness in the presence of hmw PEG.

According to a second aspect of the invention, the use of said reagent system is provided for determining by spectrometry the lmw PEG and hmw PEG concentrations in the urine of a patient having received an oral mixture of lmw PEG and hmw PEG and therefore evaluating the patient intestinal permeability.

According to a further aspect of this invention, a new method is provided for determining intestinal permeability from the urine of a patient to be tested, said method, in which intervene a lmw PEG polymer used as a hydrosoluble material which normally crosses the intestinal wall, and a hmw PEG polymer used as a hydrosoluble material, which normally does not substantially cross the intestinal wall of a healthy subject, comprising the following steps:

(1) administering *per os,* at instant T = 0, to a patient, in need of such a determination, a physiologically acceptable composition used as a test mixture, which contains a known quantity of lmw PEG and a known quantity of hmw PEG;
(2) collecting the urine, which contains lmw PEG and is susceptible to contain hmw PEG, from instant T = + 4 h to at most instant T = + 24 h and combining the urine thus collected;
(3) clarifying the urine, thus combined, by decantation and/or centrifugation for recovering a first urinary supernatant,
(4) treating said first urinary supernatant thus obtained, whereby

(a) <u>for the determination of urinary lmw PEG</u>, a first portion of said first urinary supernatant is treated with an aqueous solution containing $BaCl_2$ in order to precipitate $SO_4^{2+}$ ions in the form of $BaSO_4$, and
(b) <u>for the determination of urinary hmw PEG</u>, a second portion of said first urinary supernatant is treated with an acidic aqueous solution containing $BaCl_2$ and a strong acid (in particular HCl or preferably trifluoroacetic acid) in order to precipitate (i) $SO_4^{2+}$ ions in the form of $HaSO_4$ and (ii) proteins;

(5) discarding each precipitate formed during step (4)(a) and step (4)(b), preferably by decantation and/or centrifugation, and recovering a resulting second urinary supernatant;
(6) reacting the second urinary supernatant, thus obtained at the end of step (5), with a colour-forming reagent, whereby

(a) <u>for the determination of urinary lmw PEG</u>, a first portion of said second urinary supernatant is reacted with a first reagent, which is an aqueous solution containing (i) phosphomolybdic acid, (ii) a strong acid (in particular HCl or trifluoroacetic acid) and (iii) barium chloride, said first reagent giving a yellowish to greenish cloudiness in the presence of lmw PEG, and
(b) <u>for the determination of urinary hmw PEG</u>, a second portion of said second urinary supernatant is reacted with a second reagent, which is an acidic aqueous solution containing (iv) a cobalt II salt and (v) thiocyanate, said second reagent giving a blue to violet cloudiness in the presence of hmw PEG,
(c) a physiological saline solution, which is in particular a water solution containing 9 g/L of NaCl, is used as blank in lieu of said second urinary supernatant,

said step (5) being carried out

(α) in the absence, and

(β) in the presence

of a known added amount of lmw PEG and a known amount of hmw PEG; and
(7) measuring the absorbance of each reaction medium resulting from step (6) in order to determine the concentrations of lmw PEG and hmw PEG present in the urine to be tested, then the permeability index which is the ratio [hmw PEG]/[hnw PEG],

According to another aspect of this invention, a dosage kit is provided, which can be used in the determination of intestinal permeability with a lmw PEG and a hmw PEG, said kit comprising two different colour-focming reagents:

• a first reagent for determining lmw PEG, which is an aqueous solution containing (i) phosphomolybdic acid, (ii) a strong acid (in particular HCl or trifluoroacetic acid) and (iii) barium chloride, said first reagent giving a yellowish to greenish cloudiness in the presence of lmw PEG, and
• a second reagent for determining hmw PEG, which is an acidic aqueous solution containing (iv) a cobalt II salt and (v) thiocyanate, said second reagent giving a blue to violet cloudiness in the presence of hmw PEG.

## Brief description of the drawing figures

In the attached drawing,

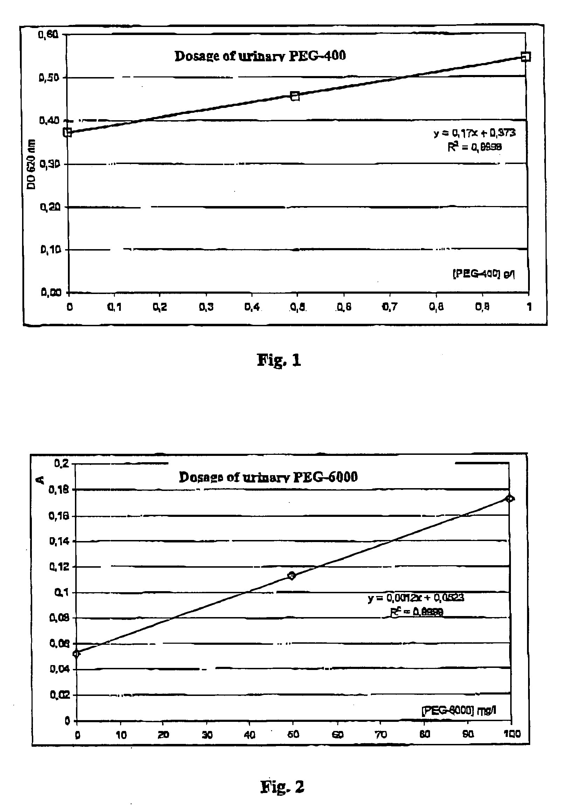

- Fig. 1 and, respectively, Fig. 2 show a graphic determination of the concentrations of PEG-400 and, respectively, PEG-6000 in tested urine after their previous administration *per os.*

## Detailed description of the invention

The main body fluid used here for the determination of both lmw PEG and hmw PEG is urine. However, the technique of this invention is directly applicable to the determination of said lmw PEG and hmw PEG in any aqueous medium, for instance other body fluids such as saliva, blood plasma, blood sera, lymph, interstitial fluid and cerebrospinal fluid. For sake of convenience, urine is used here with the aim to evaluate the intestinal permeability.

The reagent for the determination of lmw PEG is an aqueous solution of phosphomolybdic acid, a strong acid (in particular HCl or trifluoroacetic acid) and barium chloride. The reagent for the determination of hmw PEG is an aqueous solution of a cobaltous salt and thiocyanate. Those two reagents give each a coloured cloudiness whose intensity is proportional to the amount of lmw PEG or, respectively, hmw PEG present in the aqueous medium analysed by spectrometry.

Polyalkylene glycols (PAGs) other than PEGs could be used in this invention when they are of lmw. The PAG structures are:

| | | |
|---|---|---|
| structure I | $H-[-O-CH_2-CH_2-]_n-OH$ | (PEG) |
| structure II | $H-[-O-CH_2CH(CH_3)-]_n-OH$ | |
| structure III | $H-[-O-CH(CH_3)-CH(CH_3)-]_n-OH$ | |
| structure IV | $H-[-O-CH_2-C(CH_3)_2-]_n-OH$ | |
| structure V | $H-[-O-C(CH_3)_2-C(CH_3)_2-]_n-OH$ | |
| structure VI | $H-[-O-CH_2-CH_2-CH_2-]_n-OH$ | (PPG) |

High molecular weight PAGs of structures II-VI are harmful in view of their hepatotoxicity; lmw PAGs of structures II-VI can be used here since they are not toxic. However, since the hepatotoxicity of those PAGs increases with their molecular weights, their use can imply some risks especially in the upper range of lmw PAGs, Consequently, for sake of convenience, sole PEG materials of the structure I are recommended, which are safe and hydrosoluble whatsoever their molecular weight is.

The PEG materials, which are recommended here, are mainly the following ones. The lmw PEG material is a polyethylene glycol material having an average molecular weight of from 280 (PEG-280) to 630 (PEG-630), preferably an average molecular weight of from 380 to 420 and more preferably an average molecular weight of 400 (PEG-400). The hmw PEG material is a polyethylene glycol material having an average molecular weight higher than or equal to 3 000, preferably an average molecular weight of from 3000 to 8000 and more preferably of 6000 (PEG-6000).

In the reagent system, it is preferred, in view of commercial availability, that the barium chloride in said first reagent is barium chloride dihydrate ($BaCl_2.2H_2O$), the cobalt II salt in said second reagent is cobaltous nitrate (in particular the hexahydrate, $Co(NO_3)_2.6H_2O$), and said thiocyanate in said second reagent is sodium thiocyanate or more preferably potassium thiocyanate.

The use of said reagent system is recommended in the determination by spectrometry of polyethylene glycol materials in an aqueous fluid to be tested, in particular urine, wherein said reagent system comprises two different colour-forming reagents:

- a first reagent for determining lmw PEG, which is an aqueous solution containing (i) phosphomolybdic acid, (ii) an acid which is HC1 or trifluoroacetic acid, and (iii) barium chloride dihydrate, said first reagent giving a yellowish to greenish cloudiness in the presence of lmw PEG, and
- a second reagent for determining hmw PEG, which is an acidic aqueous solution containing (iv) a cobalt II salt and (v) thiocyanate, said second reagent giving a blue to violet cloudiness in the presence of hmw PEG,

said lmw PEG being a polyethylene glycol material having an average molecular weight of from 280 to 630, preferably an average molecular weight of 400 (PEG-400, and said hmw PEG being a polyethylene glycol material having an average molecular weight higher than or equal to 3 000, preferably an average molecular weight of 6000 (PEG-6000).

The method of this invention comprises:

- clarifying the urine to be tested [fresh urine collected from the patient, kept at 4 °C before treatment then combined, or urine previously combined then kept frozen at -20 °C which is thawed at room temperature (15- 25 °C) before treatment] in order to obtain a first urinary supernatant,
- pre-treating said first supernatant in order to remove the products which can impair or intervene in the reaction with the reagent system, namely: (i) $SO_4^{2-}$ ions in the determination of lmw PEG, and (ii) $SO_4^{2-}$ ions and proteins in the determination of hmw PEG, in order to obtain a second urinary supernatant, and
- treating said second urinary supernatant with said first reagent and, respectively, said second reagent, before measuring the optical density (i. e. the absorbance).

To be more precise, in step (1) of the method according to this invention, the composition administered *per os* contains from 1 to 10 g of 1mw PEG and from 1 to 30 g of hmw PEG. It is preferable that the amount of hmw PEG, which is orally administered, is generally higher than the one of lmw PEG. In practice, amounts of 1 to 10 g of lmw PEG and 10 to 30 g of hmw PEG are recommended, and preferably amounts of 1 g ≤ 1mw PEG < 10 g and 10 g ≤ hmw PEG ≤ 30 g.

Advantageously, the treatment of step (4)(a) further comprises adding an alkali metal hydroxide, preferably NaOH, and/or hmw PEG in the so-called pre-treatment solution.

Moreover, in order that the determination results do not depend on the urine matrix, the method of the invention takes into account the technique of the added known amounts, where lmw PEG and hmw PEG are concerned. In practice, the treatment of said step (4)(a) further comprises advantageously adding an aqueous solution containing 0 g/L or 1-5 g/L of lmw PEG, and 0 g/L or 0.05-0.1 g/L of hmw PEG, for providing the ($\alpha$) and ($\beta$) amounts of lmw PEG and hmw PEG, which are needed in step (6) for the determination of lmw PEG. Similarly, the treatment of step (4)(b) further comprises advantageously adding an aqueous solution containing 0 g/L or 1-5 g/L of lmw PEG, and 0 g/L or 0.05-0,1 g/L of hmw PEG, for providing the ($\alpha$) and ($\beta$) amounts of lmw PEG and hmw PEG, which are needed in step (6) for the determination of hmw PEG.

According to the invention, the reaction of step (6)(a) comprises adding to said first portion of urinary supernatant an aqueous solution containing preferably 4 g/L of phosphomolybdic acid, 12 g/L of trifluoroacetic acid and 40 g/L of barium chloride dihydrate. The reaction of step (6)(b) comprises adding to said second portion of urinary supernatant an aqueous solution containing preferably 30-35 g/L of $Co(NO_3)_2.6H_2O$ and 110-112 g/L of KSCN. It is compulsory that said aqueous solution is an acidic one, that is to say that its pH is lower than 7,0.

The blank solution of step (6)(c) can contain, besides NaCl, a small amount of lmw PEG (for instance 1 g/L of PEG-400) and a very small amount of hmw PEG (for instance 0.01 g/L of PEG-6000).

Moreover, it is recommended that in step (6), each reaction medium is incubated for a period of 30 to 45 minutes at room temperature (i, e. 15-25 °C), and in step (7), the absorbance is measured at 620 nm in the determination of lmw PEG, and at 620 nm and 690 nm in the determination of hmw PEG. As indicated hereinabove, the intensity of the absorbance (optical density or OD) is proportional to the amount of the lmw PEG or the hmw PEG which are present.

For obtaining in step (3) said first urinary supernatant, and in step (5) said second urinary supernatant, two possibilities are available : (i) decantation for at least 15 minutes then centrifugation for 2-3 minutes at 2000-4000 rpm, or (ii) direct centrifugation for 2-10 minutes at about 3000-4000 rpm.

The preferred method, which is recommended here, comprises:

(A) administering *per os,* at T = 0, to a patient in need of such a determination a test mixture containing from 1 to 10 g of PEG-400 and from 10 to 30 g of PEG-6000; collecting the urine from instant T = + 4 h to at most T = + 24 h and combining the urine thus collected; and centrifuging the urine thus combined for 10 minutes at 3000 rpm, for recovering a first urinary supernatant;

(B) treating the first urinary supernatant, thus obtained, and corresponding controls as follows:

(a) <u>for the determination of urinary PEG-400</u>, with the use of twelve tubes, numbered 1-12,

- distributing, in tubes 1, 4, 7 and 10, 38 $\mu$L of an aqueous solution containing 9 g/L of NaCl,
- distributing, in tubes 2, 5, 8 and 11, 38 $\mu$L of an aqueous solution containing 9 g/L of NaCl, 2.5 g/L of PEG-400 and 0.5 g/L of PEG-6000,
- distributing, in tubes 3, 6, 9 and 12, 38 $\mu$L of an aqueous solution containing 9 g/L of NaCl, 5 g/L of PEG-400 and 1 g/L of PEG6000,
- distributing, in tubes 1-12, 60 $\mu$l of an aqueous solution containing 4 g/L of NaOH,
- distributing, in tubes 1-6, 95 $\mu$L of said first urinary supernatant,
- distributing, in tubes 7-12, 95 $\mu$L of an aqueous solution (solution "V"), used as a control without urine, containing 9 g/L of NaCl, 1 g/L of PEG400 and 0.05 g/L of PEG-6000),
- distributing, in tubes 1-12, 390 $\mu$L of an aqueous solution containing 20 g/L of BaCl$_2$.2H$_2$O and 0.15 g/L of PEG-6000,
- incubating the content of each tube for 10 minutes at room temperature (15-25 °C), then
- centrifuging each tube for 2-3 minutes at about 4000 rpm;

(b) <u>for the determination of urinary PEG-6000</u>, with the use of twelve tubes, numbered 13-24:

- distributing, in tubes 13, 16, 19 and 22, 38 $\mu$L of an aqueous solution containing 9 g/L of NaCl,
- distributing, in tubes 14, 17, 20 and 23, 38 $\mu$L of an aqueous solution containing 9 g/L of NaCl, 2.5 g/L of PEG-400 and 0.5 g/L of PEG-6000,
- distributing, in tubes 15, 18, 21 and 24, 38 $\mu$L of an aqueous solution containing 9 g/L of NaCl, 5 g/L of PEG-400 and 1 g/L of PEG-6000,
- distributing, in tubes 13-18, 380 $\mu$L of said first urinary supernatant,
- distributing, in tubes 19-24, 380 $\mu$L of an aqueous solution (solution "W"), used as a control without urine, containing 9 g/L of NaCl. 1 g/L of PEG-400 and 0.05 g/L of PEG-6000,
- distributing, in tubes 13-24, 95 $\mu$L of an aqueous solution containing 78 g/L of BaCl$_2$.2H$_2$O and 90 g/L of tri fluoroacetic acid
- incubating the content of each tube for 10 minutes at room temperature (15-25 °C), then
- centrifuging each tube for 2-3 minutes at about 4000 rpm,

(C) reacting the second urinary supernatant, thus obtained, and corresponding controls as follows:

(a) <u>for the determination of urinary PEG-400</u>, with the use of twelve wells of a 24-well microplate, numbered A1, B1, C1, D1, E1, G1, A2, B2, C2, D2, E2, F2 and G2:

- distributing 50 $\mu$L of the aqueous solution containing 9 g/L of NaCl in wells A 1 and A2,
- distributing 50 $\mu$L of the supernatant of tubes 1-12 in wells B1, C1, D1, E1, F1, G1, B2, C2, D2, E2, F2 and, respectively, G2.
- distributing 250 $\mu$L of an aqueous solution containing 4 g/L of phosphomolybdic acid, 12 g/L of trifluoroacetic acid and 40 g/L of BaCl$_2$.2H$_2$O in wells A 1 to G2,
- incubating for 30 minutes at room temperature, then
- reading the absorbance of those 12 wells at 620 nm;

(b) <u>for the determination of urinary PEG-6000</u>, with the use of the remaining Twelve wells of said 24-well microplate, numbered A3, B3, C3, D3, E3, G3, A4, B4, C4, D4, E4, F4 and G4:

- distributing 180 μL of the aqueous solution containing 9 g/L of NaCl in wells A3 and A4,
- distributing 180 μL of the supernatant of tubes 13-24 in wells B3, C3, D3, E3, F3, G3, B4, C4, D4, E4, F4 and, respectively, G4,
- distributing 90 μL of an aqueous solution containing 33 g/L of cobaltous nitrate hexahydrate, and 111 g/L of $BaCl_2.2H_2O$ in wells A3 to G4,
- incubating for 30 minutes at room temperature, then
- reading the absorbance of those 12 wells at 620 nm and 690 nm; and

(D) determining, from the absorbance values thus obtained, the concentrations of PEG-400 and PEG-6000-in the tested urine.

The preferred dosage kit comprises at least the two reagents, namely:

- a first reagent comprising 4 g/L of phosphomolybdic acid, 12 g/L of trifluoroacetic acid and 40 g/L of $BaCl_2.2H_2O$, and
- a second reagent comprising 33 g/L of cobaltous nitrate hexahydrate, and 111 g/L of $BaCl_2.2H_2O$;

it may also comprise the other treatment solutions as disclosed in the above preferred method, for instance solutions "V" and "W".
The absorbance of urinary lmw PEG and urinary hmw PEG is calculated as follows:

- for urinary lmw PEG, $A = A_{620U} - A_{620S}$
  wherein :

  $A_{620U}$ = absorbance at 620 nm of urine supernatant + known added amounts (for determination of lmw PBG),
  $A_{620S}$ = absorbance at 620 nm of saline solution (solution "V" cited hereiaabove);

- for urinary hmw PEG, $A = (Abs_{620U}-Abs_{690U}) - (Abs_{620S}-Abs_{690S})$
  wherein:

  $Abs_{620U}$ = absorbance at 620 nm of urine supernatant + known added amounts (for determination of hmw PEG),
  $Abs_{690U}$ = absorbance at 690 nm of urine supernatant + known added amounts (for determination of hmw PEG),
  $Abs_{620S}$ = absorbance at 620 nm of saline solution (solution "W" cited hereinabove);
  $Abs_{690S}$ = absorbance at 690 nm of saline solution (solution "W" cited hereinabove),

When expressing the absorbance [in ordinate (Y)] as a function of the concentration [in absciss (X)] of 1mw PEG or hmw PEG, a curve A = f([PBG] is obtained, which is a straight line represented by the equation: Y = aX + b. The concentration X of 1mw PEG or hmw PEG in the urine, which is looked for, is determined by the absolute value of the intersection of said straight line with the axis of abscisses. To be precise, when Y = 0, said X value is:

$$X = \left| -b/a \right|$$

Since several causes, in particular intestinal infection, inflammatory reaction, hypersensitivity to certain food, hepatic pathology, celiac disease, Crohn's disease, ulcerative hemorrhagic retrocolitis, Behçet's disease, prolonged intake of certain medicaments (antibiotics, anti-inflammatory drugs), type II diabetes, hypoxia or intestinal ischemia (inducing the production of highly toxic free radicals) can provoke an increase in the intestinal permeability vis-à-vis larger molecules by rupture intercellular bonds at the level of the intestinal epithelium (in particular by deregulating tight junctions and augmenting intercellular space), the method according to this invention can be usefully used as a marker of an abnormal increase in intestinal permeability.
Aging is also a risk factor, since (i) height and number of villosities, and (ii) cell proliferation de decrease with age. The influence of aging on intestinal permeability can be checked with the method according to this invention,
[0036]   Other advantages and characteristics of this invention will emerge more clearly on reading the embodiments measures which follow. Needless to say, this set of elements and data is not limiting in any way, but is given for illustrative purposes.

### *Example 1     Urine clarification*

A patient to be tested is administered at instant T = 0 with an oral mixture containing a known amount of PEG-400 and a known amount of PBG-6000. The urines collected between instant T = + 4h and instant T = + 24h and kept at 4 °C were combined and clarified at room temperature by decantation for 20 minutes then centrifugation for 2-3 minutes at 2000 rpm. The first supernatant thus obtained is used in Examples 2-4 for determining PEG-400 through Examples 5-7 and in Example 8 for determining PEG-6000 through Example 9.

### *Example 2     Pre-treatment*

To 38 µL of an aqueous "solution for known addition" containing 9 g/L of NaCl [plus 0 g/L of PEG-400 and 0 g/L of PEG-6000 ("control 0") or plus 2.50 g/L of PEG-400 and 1,00 g/L of PEG-6000 ("control 1") or plus 1.25 g/L of PBG-400 and 0.50 g/L of PEG-6000 ("control 2")] and 95 µL of clarified urine as obtained in Ex. 1, were added 450 µL of an aqueous solution containing 20 g/L of barium chloride dihydrate at room temperature. The three resulting solutions were left to stay at room temperature for 30 minutes then were centrifuged for 2-3 minutes at 2000 rpm, to give three different second urinary supernatants.

### *Example 3     Pre-treatment*

To 38 µL of an aqueous "solution for known addition" containing 9 g/L of NaCl [plus 0 g/L of PEG-400 and 0 g/L of PEG-6000 ("control 0") or plus 1.25 g/L of PEG-400 and 0.50 g/L of PEG-6000 ("control 1") or plus 2.50 g/L of PEG-400 and 1.00 g/L of PEG-6000 ("control 2")] and 95 µL of clarified urine as obtained in Ex. 1, were added 60 µL of an aqueous solution containing NaOH 0.1N and 390 µL of an aqueous solution containing 20 g/L of barium chloride dihydrate at room temperature. The three resulting solutions were left to stay at room temperature for 30 minutes then were centrifuged for 2-3 minutes at 3000 rpm, to give three different second urinary supernatants.

### *Example 4     Pre-treatment*

To 38 µL of an aqueous "solution for known addition" containing 9 g/L of NaCl [plus 0 g/L of PEG-400 and 0 g/L of PEG-6000 ("control 0") or plus 1.25 g/L of PEG-400 and 0.50 g/L of PEG-6000 ("control 1") or plus 2.50 g/L of PEG-400 and 1.00 g/L of PEG-6000 ("control-2")] and 95 µL of clarified urine as obtained in Ex. 1, were added 450 µL of an aqueous solution containing 20 g/L of barium chloride dihydrate and 150 mg/L of PEG-6000 at room temperature. The three resulting solutions were left to stay at room temperature for 30 minutes then were centrifuged for 2-3 minutes at 4000 rpm, to give three different second urinary supernatants.

### *Example 5     Colour reaction and measure of absorbance (OD)*

In a microtube were poured 50 µL of second urinary supernatant (three microtubes were used, one for each supernatant, as obtained in Ex. 2) then 250 µL of an aqueous solution containing 1 g/L of phosphomolybdic acid, 12 g/L of trifluoroacetic acid and 40 g/L of barium chloride dihydrate at room temperature. Each reaction medium was left to stay for 30-45 minutes at room temperature. Alter decantation, three final supernatants with a yellowish to greenish colour were obtained then analysed by spectrometry at 620 nm.

Taking into account the volumes of solutions "for known addition" of "control 0", "control 1" and "control 2"; and of urine, the concentrations of PEG-400 added in urine are of: 0 g/L where "control 1" is concerned, 0.5 g/L where "control 2" is concerned and 1.0 g/L where "control 2" is concerned.

The spectrometric results with those final supernatants are given in Table I and summed up in. Fig. 1.

*Table I*

| Dosage af PEG-400 (with added amounts of 0; 0.5; and 1.0 g/L of PEG-400 and reagent blank OD of 0.040 at 620 nm) | | |
|---|---|---|
| [PEG-400] (g/L) | OD assay (620 nm) | OD control (620 nm) |
| 0.0 | 0.414 | 0.374 |
| 0.5 | 0.496 | 0.456 |
| 1.0 | 0.584 | 0.544 |

The curve obtained, a strait line of the equation:

$$OD = 0.17 \times [PEG\text{-}400] + 0.373$$

cutting the axis of abscisses at a value X = |-0.373/0.17| = 2,194, indicated that the concentration of PEG-400 in the urine sample to be tested was of 2.194 g/L of urine.

### Examples 6-7        Colour reaction and measure of absorbance (OD)

Similar results were obtained by treating the three second supernatants of Ex. 3 and, respectively, Ex. 4 according to the method of Example 5.

### Example 8        Pre-treatment

To 38 $\mu$L of an aqueous "solution for known addition" containing 9 g/L of NaCl [plus 0 g/L of PEG-400 and 0 g/L of PBG,6000 ("control 0") or plus 0.50 g/L of PEG-400 and 50 mg/L of PEG-6000 ("control 1") or plus 1-00 g/L of PEG-400 and 100 mg/L of PEG-6000 ("control 2")] and 380 $\mu$L of clarified urine as obtained in Ex. 1, were added 95 $\mu$L of an aqueous solution containing 90 g/L of trifluoroacetic acid and 75 g/L of barium chloride dihydrate at room temperature. The three resulting solutions were left to stay at room temperature for 30 minutes then were centrifuged for 2-3 minutes at 2000 rpm, to give three different second urinary supernatants.

### Example 9        Colour reaction and measure of absorbance (OD)

In a microtube were poured 180 $\mu$L of second urinary supernatant (three microtubes were used, one for each supernatant, as obtained in Ex. 8) then 90 $\mu$L of an aqueous solution containing 33 g/L of cobaltous nitrate hexahydrate and 110 g/L of KSCN at room temperature. Each reaction medium was left to stay for 30-45 minutes at room temperature. After decantation, three final supernatants with a blue to violet colour were obtained then analysed by spectrometry at 620 nm and 690 nm.

Taking into account the volumes of solutions "for known addition" of "control 0", "control 1" and "control 2"; and of urine, the concentrations of PEG-600 added in urine are of: 0 g/L where "control 1" is concerned, 0.05 g/L where "control 2" is concerned and 0.10 g/L where "control 2" is concerned.

The spectrometric results with those final supernatants are given in Table II and summed up in Fig. 2.

### Table II

| Dosage of PEG-6000 (with added amounts of 0; 50; and 100 mg/L of PEG-6000) | | | |
|---|---|---|---|
| PEG-6000 (mg/L) | OD assay (620 nm) | OD assay (690 nm) | OD control |
| 0 | 0.178 | 0.086 | 0.052 |
| 50 | 0.274 | 0.121 | 0.113 |
| 100 | 0.362 | 0.150 | 0.172 |

The curve obtained, a strait line of the equation:

$$OD = 0.0012 \times [PEG\text{-}6000] + 0.0523$$

cutting the axis of abscisses at a value X = | -0.0523/0.00120 | = 43.6, indicated that the concentration of PBG-6000 in the urine sample to be tested was of 43.6 mg/L of urine.

### Example 10        Preferred mode of dosage

Starting from a different urine sample and by using the above mentioned preferred method of dosage, the following results were obtained (see Tables III and IV) in view of the volumes (i) of solution "V" and solution "W" and (ii) of urine.

**Table III**

| Dosage of PEG-400 (with added amounts of 0; 1.0; and 2.0 g/L of PEG-400 and reagent blank OD of 0.033 at 620-690 nm) | | |
| --- | --- | --- |
| [PEG-400] (g/L) | OD assay (620 nm) | OD control (620 nm) |
| 0.0 | 0.212 | 0.159 |
| 1.0 | 0.374 | 0.321 |
| 2.0 | 0.546 | 0.493 |

The curve obtained a strait line of the equation;

$$OD = 0.167 \times [PEG\text{-}400] + 0.1573$$

cutting the axis of abscisses at a value X = |-0.1573/0,167 | = 0.942, indicated that the concentration of PEG-400 in the urine sample to be tested was of 0.942 g/L of urine.

**Table IV**

| Dosage of PEG-6000 (with added amounts of 0; 050; and 0.100 g/L of PEG-6000 and reagent blank OD of 0.032 at 620-690 nm) | | | |
| --- | --- | --- | --- |
| PEG-6000 (g/L) | OD assay (620 nm) | OD assay (690 nm) | OD control OD control |
| 0 | 0.124 | 0.08 | 0.011 |
| 0.050 | 0.207 | 0.104 | 0.071 |
| 0.100 | 0.283 | 0.116 | 0.135 |

The curve obtained, a strait line of the equation:

$$OD = 1.24 \times [PEG\text{-}6000] + 0.0103$$

cutting the axis of abscisses at a value X = |-0.0103/1.24| = 0.00830, indicated that the concentration of PEG-6000 in the urine sample to be tested was of 0.00830 g/L of urine (i.e. 8.30 mg/L of urine).

**Claims**

1. A reagent system, which can be used in the determination by spectrometry of polyethylene glycol (PEG) materials in an aqueous fluid to be tested, such as a biological fluid, in particular urine, wherein said reagent system comprises two different colour-forming reagents:

   • a first reagent for determining low molecular weight (lmw) PEG, which is an aqueous solution containing (i) phosphomolybdic acid, (ii) a strong acid (in particular HCl or trifluoroacetic acid) and (iii) barium chloride, said first reagent giving a yellowish to greenish cloudiness in the presence of lmw PEG, and
   • a second reagent for determining high molecular weight (hmw) PEG, which is an acidic aqueous solution containing (iv) a cobalt II salt and (v) thiocyanate, said second reagent giving a blue to violet cloudiness in the presence of hmw PEG.

2. A reagent system according to claim 1, wherein the barium chloride in said first reagent is barium chloride dihydrate ($BaCl_2.2H_2O$), wherein the cobalt II salt in said second reagent is cobaltous nitrate (in particular the hexahydrate, $Co(NO_3)_2.6H_2O$), and wherein said thiocyanate in said second reagent is sodium

3. The use of a reagent system as claimed in claim 1 or 2 in the determination by spectrometry of polyethylene glycol (PEG) materials in an aqueous fluid to be tested, in particular urine, wherein said reagent system comprises two different colour-forming reagents:

• a first reagent for determining lmw PEG, which is an aqueous solution containing (i) phosphomolybdic acid, (ii) an acid which is HCl or trifluoroacetic acid, and (iii) barium chloride, dehydrate, said first reagent giving a yellowish to greenish cloudiness in the presence of lmw PEG, and

• a second reagent for determining hmw PEG, which is an acidic aqueous solution containing (iv) a cobalt II salt and (v) thiocyanate, said second reagent giving a blue to violet cloudiness in the presence of hmw PEG,

said lmw PEG being a polyethylene glycol material having an average molecular weight of from 280 to 630, preferably an average molecular weight of 400 (PEG-400, and said hmw PEG being a polyethylene glycol material having an average molecular weight higher than or equal to 3 000, preferably an average molecular weight of 6000 (PEG-6000).

4. A method for determining intestinal permeability in the urine of a patient to be tested, said method, in which intervene a lmw PEG polymer used as a hydrosoluble material, which normally crosses the intestinal wall, and a hmw PEG polymer used as a hydrosoluble material, which normally does not substantially cross the intestinal wall of a healthy subject, comprising the following-steps:

(1) administering *per os,* at instant T = 0, to a patient, in need of such a determination, a physiologically acceptable composition used as a test mixture, which contains a known quantity of lmw PEG and a known quantity of hmw PEG;

(2) collecting the urine, which contains lmw PEG and is susceptible to contain hmw PEG, from instant T = + 4 h to at most instant T = + 24 h and combining the urine thus collected;

(3) clarifying the urine, thus combined, by decantation and/or centrifugation for recovering a first urinary supernatant;

(4) treating said first urinary supernatant thus obtained, whereby

(a) <u>for the determination of urinary lmw PEG</u>, a first portion of said first urinary supernatant is treated with an aqueous solution containing $BaCl_2$ in order to precipitate $SO_4^{2-}$ ions in the form of $BaSO_4$, and

(b) <u>for the determination of urinary hmw PEG</u>, a second portion of said first urinary supernatant is treated with an acidic aqueous solution containing $BaCl_2$ and a strong acid (in particular HC1 or preferably trifluoroacetic acid) in order to precipitate (i) $SO_4^{2+}$ ions in the form of $BaSO_4$ and (ii) proteins;

(5) discarding each precipitate formed during step (4)(a) and step (4)(b), preferably by decantation and/or centrifugation, and recovering a resulting second urinary supernatant;

(6) reacting the second urinary supernatant, thus obtained at the end of step (5), with a colour-forming reagent, whereby

(a) <u>for the determination of urinary lmw PEG</u>, a first portion of said second urinary supernatant is reacted with a first reagent, which is an aqueous solution containing (i) phosphomolybdic acid, (ii) a strong acid (in particular HCl or trifluoroacetic acid) and (iii) barium chloride, said first reagent giving a yellowish to greenish cloudiness in the presence of lmw PEG, and

(b) <u>for the determination of urinary hmw PEG</u>, a second portion of said second urinary supernatant is reacted with a second reagent, which is an acidic aqueous solution containing (iv) a cobalt IT- salt and (v) thiocyanate, said second reagent giving a blue to violet cloudiness in the presence of hmw PEG,

(c) a physiological saline solution, which is in particular a water solution containing 9 g/L of NaCl, is used as blank in lieu of said second urinary supernatant,

said step (5) being carried out

(α) in the absence, and
(β) in the presence

of a known added amount of lmw PEG and a known added amount of hmw PEG; and

(7) measuring the absorbance of each reaction medium resulting from step (6) in order to determine the concentrations of lmw PEG and hmw PEG present in the urine to be tested, then the permeability index which is the ratio [hmw PEG]/[1mw PEG].

**5.** A method according to claim 4, wherein said lmw PEG is a polyethylene glycol material having an average molecular weight of from 280 to 630, preferably from 380 to 420 and more preferably of 400 (PEG-400); and said hmw PEG is a polyethylene glycol material having an average molecular weight higher than or equal to 3000, preferably from 3000 to 8000 and more preferably of 6000 (PEG-6000),

**6.** A method according to claim 4 wherein, in step (1), the composition administered *per os* contains from 1 to 10 g of lmw PEG and from 1 to 30 g of hmw PEG.

**7.** A method according to claim 4, wherein the treatment of step (4)(a) further comprises adding an alkaline metal hydroxide, preferably NaOH, and/or hmw PEG.

**8.** A method according to claim 4 or 7, wherein the treatment of said step (4)(a) further comprises adding an aqueous solution containing 0 g/L or 1-5 g/L of lmw PEG, and 0 g/L or 0,05-0.1 g/L of hmw PEG, for providing the ($\alpha$) and ($\beta$) amounts of lmw PEG and hmw PEG, which are needed in step (6) for the determination of lmw PEG.

**9.** A method according to claim 4, wherein the treatment of step (4)(b) further comprises adding an aqueous solution containing 0 g/L or 1-5 g/L of lmw PEG, and 0 g/L or 0.05-0.1 g/L of hmw PEG, for providing the ($\alpha$) and ($\beta$) amounts of lmw PEG and hmw PEG, which are needed in step (6) for the determination of hmw PEG.

**10.** A method according to claim 4, wherein the reaction of step (6)(a) comprises adding to said first portion of urinary supernatant an aqueous solution containing 4 g/L of phosphomolybdic acid, 12 g/L of trifluoroacetic acid and 40 g/L of barium chloride dihydrate.

**11.** A method according to claim 4, wherein the reaction of step (6)(b) comprises adding to said second portion of urinary supernatant an aqueous solution containing 30-35 g/L of $Co(NO_3)_2.6H_2O$ and 110-112 g/L of KSCN.

**12.** A method according to claim 4, wherein in step (6), each reaction medium is incubated for a period of 30 to 45 minutes at room temperature, and wherein, in step (7), the absorbance is measured at 620 nm in the determination of lmw PEG, and at 620 nm and 690 nm in the determination of hmw PEG.

**13.** A method according to claim 4, wherein lmw PEG is PEG-400, and hmw PEG is PEG-6000.

**14.** A method according to claim 4, which comprises:

(A) administering *per os,* at T = 0, to a patient in need of such a determination a test mixture containing from 1 to 10 g of PEG-400 and from 10 to 30 g of PEG-6000; collecting the urine from instant T = + 4 h to at most T = + 24 h and combining the urine thus collected, and centrifuging the urine thus combined for 10 minutes at 3000 rpm, for recovering a first urinary supernatant;
(B) treating the first urinary supernatant, thus obtained, and corresponding controls as follows:

(a) <u>for the determination of urinary PEG-400</u>, with the use of twelve tubes, numbered 1-12,

• distributing, in tubes 1, 4, 7 and 10, 38 $\mu$L of an aqueous solution Containing 9 g/L of NaCl,
• distributing, in tubes 2, 5, 8 and 11, 38 $\mu$L of an aqueous solution containing 9 g/L of NaCl, 2.5 g/L of PEG-400 and 0.5 g/L of PEG-6000,
• distributing, in tubes 3, 6, 9 and 12, 38 $\mu$L of an aqueous solution containing 9 g/L of NaCl, 5 g/L of PEG-400 and 1 g/L of PEG-6000,
• distributing, in tubes 1-12, 60 $\mu$L of an aqueous solution containing 4 g/L of NaOH,
• distributing, in tubes 1-6, 95 $\mu$L of said first urinary supernatant,
• distributing, in tubes 7-12, 95 $\mu$L of an aqueous solution, used as a control without urine, containing 9 g/L of NaCl, 1 g/L of PEG-400 and 0.05 g/L of PEG-6000,
• distributing, in tubes 1-12, 390 $\mu$L of an aqueous solution containing 20 g/L of $BaCl_2.2H_2O$ and 0.15 g/L of PEG-6000,
• incubating the content of each tube for 10 minutes at room temperature (15-25 °C), then
• centrifuging each tube for 2-3 minutes at about 4000 rpm;

(b) <u>for the determination of urinary PEG-6000</u>, with the use of twelve tubes, numbered 13-24:

• distributing, in tubes 13, 16, 19 and 22, 38 μL of an aqueous solution containing 9 g/L of NaCl,

• distributing, in tubes 14, 17, 20 and 23, 38 μL of an aqueous solution containing 9 g/L of NaCl, 2.5 g/L of PEG-400 and 0.5 g/L of PEG-6000,

• distributing, in tubes 15, 18, 21 and 24, 38 μL of an aqueous solution containing 9 g/L of NaCl, 5 g/L of PEG-400 and 1 g/L of PEG-6000,

• distributing, in tubes 13-18, 380 μL of said first urinary supernatant,

• distributing, in tubes 19-24, 380 μL of of an aqueous solution, used as a control without urine, containing 9 g/L of NaCl, 1 g/L of PEG-400 and 0.05 g/L of PEG-6000,

• distributing, in tubes 13-24, 95 μL of an aqueous solution containing 78 g/L of $BaCl_2.2H_2O$ and 90 g/L of tri fluoroacetic acid

• incubating the content of each tube for 10 minutes at room temperature (15-25 °C), then

• centrifuging each tube for 2-3 minutes at about 4000 rpm;

(C) reacting the second urinary supernatant, thus obtained, and corresponding controls as follows:

(a) for the determination of urinary PEG-400, with the use of twelve wells of a 24-well microplate, numbered A1, B1, C1, D1, E1, G1, A2, B2, C2, D2, E2, F2 and G2;

• distributing 50 μL of the aqueous solution containing 9 g/L of NaCl in wells A 1 and A2,

• distributing 50 μL of the supernatant of tubes 1-12 in wells B1, C1, D1, E1, F1, G1, B2, C2, D2, E2, F2 and, respectively, G2,

• distributing 250 μL of an aqueous solution containing 4 g/L of phosphomolybdic acid, 12 g/L of trifluoroacetic acid and 40 g/L of $BaCl_2.2H_2O$ in wells A1 to G2,

• incubating for 3 0 minutes at room temperature, then

• reading the absorbance of those 12 wells at 620 nm;

(b) for the determination of urinary PEG-6000, with the use of the remaining twelve wells of said 24-well microplate, numbered A3, B3, C3, D3, E3, G3, A4, B4, C4, D4, E4, F4 and G4:

• distributing 180 μL of the aqueous solution containing 9 g/L of NaCl in wells A3 and A4,

• distributing 180 μL of the supernatant of tubes 13-24 in wells B3, C3, D3, B3, F3, G3, B4, C4, D4, E4, F4 and, respectively, G4,

• distributing 90 μL of an aqueous solution containing 33 g/L of cobaltous nitrate hexahydrate, and 111 g/L of $BaCl_2.2H_2O$ in wells A3 to G4,

• incubating for 30 minutes at room temperature, then

• reading the absorbance of those 12 wells at 620 nm and 690 nm; and

(D) determining, from the absorbance values thus obtained, the concentrations of PEG-400 and PEG-6000 in the tested urine.

**15.** A dosage kit, which can be used in the determination of intestinal permeability with a lmw PEG and a hmw PEG, said kit comprising two different colour-forming reagents:

• a first reagent for determining low molecular weight (lmw) PEG, which is an aqueous solution containing (i) phosphomolybdic acid, (ii) a strong said (in particular HCl or trifluoroacetic acid) and (iii) barium chloride, said first reagent giving a yellowish to greenish cloudiness in the presence of lmw PEG, and

• a second reagent for determining high molecular weight (hmw) PEG, which is an acidic aqueous solution containing (iv) a cobalt II salt and (v) thiocyanate, said second reagent giving a blue to violet cloudiness in the presence of hmw PEG.

**16.** A kit according to claim 15, wherein:

• said first reagent comprises 4 g/L of phosphomolybdic acid, 12 g/L of trifluoroacetic acid and 40 g/L of $BaCl_2.2H_2O$, and

• said second reagent comprises 33 g/L of cobaltous nitrate hexahydrate, and 111 g/L of $BaCl_2.2H_2O$.

**Fig. 1**

**Fig. 2**

**European Patent Office**

**EUROPEAN SEARCH REPORT**

Application Number

EP 05 01 8930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 382 964 A (CHUGAI SEIYAKU KABUSHIKI KAISHA) 21 January 2004 (2004-01-21) <br> * abstract * <br> * page 3, line 49 - page 5, line 18 * <br> * paragraphs [0051] - [0083] * <br> ----- | 1-3 | G01N21/78 <br> G01N31/16 <br> G01N31/22 |
| Y | DATABASE WPI <br> Section Ch, Week 198120 <br> Derwent Publications Ltd., London, GB; <br> Class A35, AN 1981-35736D <br> XP002366124 <br> & SU 754 307 B (URALS CHEM IND RES) <br> 7 August 1980 (1980-08-07) <br> * abstract * <br> ----- | 1-3 | |
| Y | DATABASE WPI <br> Section Ch, Week 198738 <br> Derwent Publications Ltd., London, GB; <br> Class A25, AN 1987-269284 <br> XP002366125 <br> & SU 1 286 991 A (IVANOV V N) <br> 30 January 1987 (1987-01-30) <br> * abstract * <br> ----- | 1-3 | |
| Y | DE 24 35 759 A1 (MERCK PATENT GMBH, 6100 DARMSTADT) 12 February 1976 (1976-02-12) <br> * page 1, last paragraph - page 4, last paragraph * <br> ----- | 1-3 | |
| Y | CHILDS C E: "THE DETERMINATION OF POLYETHYLENE GLYCOL IN GAMMA GLOBULIN SOLUTIONS" <br> MICROCHEMICAL JOURNAL, NEW YORK, NY, US, <br> vol. 20, no. 2, 1975, pages 190-192, <br> XP009027279 <br> ISSN: 0026-265X <br> * pages 190-191 * <br> ----- | 1-3 | |

TECHNICAL FIELDS SEARCHED (IPC)

G01N

The present search report has been drawn up for all claims

| Place of search | Date of completion of the search | Examiner |
|---|---|---|
| Munich | 6 February 2006 | Michalitsch, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 01 8930

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2006

| Patent document cited in search report | | Publication date | Patent family member(s) | | Publication date |
|---|---|---|---|---|---|
| EP 1382964 | A | 21-01-2004 | WO<br>US | 02086492 A1<br>2004185572 A1 | 31-10-2002<br>23-09-2004 |
| SU 754307 | B | 07-08-1980 | NONE | | |
| SU 1286991 | A | 30-01-1987 | NONE | | |
| DE 2435759 | A1 | 12-02-1976 | NONE | | |

For more details about this annex : see Official Journal of the European Patent Office, No. 12/82

**EP 1 760 456 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005024423 A

**Non-patent literature cited in the description**

- **CHADWICK VS et al.** Measurements of intestinal permeability using low molecular weight polyethylene glycols (PEG 400). *Gastroenterology,* 1977, vol. 73, 241-251
- **LLOYD JB et al.** Intestinal permeability to polyethylene glycol and sugars. *Clinical Science,* 1998, vol. 95, 107-110

- **PARLESAK A et al.** Parallel determination of gut permeability in man with M400, M1500, M4000 and M10000 polyethylene glycol. *Eur. J. Clin. Biochem.,* 1994, vol. 32, 813-820